# EUROPEAN PATENT SPECIFICATION

(11) **EP 3 854 666 B1**
(45) Date of publication and mention of the grant of the patent: **03.07.2024**
(21) Application number: 21153804.6
(22) Date of filing: 27.01.2021
(51) Int. Cl.: B62J 15/02

(54) **ASSEMBLY OF TWO MUTUALLY CONNECTABLE BICYCLE COMPONENTS**
ANORDNUNG VON ZWEI MITEINANDER VERBINDBAREN FAHRRADKOMPONENTEN
ASSEMBLAGE DE DEUX COMPOSANTS DE BICYCLETTE MUTUELLEMENT CONNECTABLES

(30) Priority: 27.01.2020 BE 202005051
(43) Date of publication of application: 28.07.2021
(73) Proprietor: Curana Invest bvba, 8850 Ardooie (BE)
(72) Inventor: VENS, Dirk, 8800 ROESELARE (BE)
(74) Representative: Ostyn, Frans

(56) References cited:
- EP-A1- 1 705 109
- CN-U- 203 902 758
- CN-U- 204 488 752
- DE-U1-202009 002 729
- DE-U1-202015 004 640
- TW-U- M 490 432
- US-A- 1 135 271
- US-A- 4 671 438
- US-A1- 2008 179 473

## Description

This invention relates to an assembly of a first bicycle component and a second bicycle component, in which these bicycle components are mutually connectable and the first bicycle component comprises, to that end, a track with at least one elongate rail, in which the second bicycle component is connectable to the track and is slidable along this track.

A bicycle is composed of various bicycle components that are connected to one another. Some bicycle components are secured to one another by means of nuts and bolts, screws, etc. This type of securing is suitable for components which are always connected to one another in the same position. During production of the bicycle components, these bicycle components are provided with the necessary passages/openings/holes. However, not all bicycle components are in the same position on every bicycle. If bolts, screws and the like are used, this means that either multiple holes have to be provided in the bicycle components, in which case not all of the holes will be used, which is not aesthetically pleasing, or that holes have to be drilled during the mounting of the various bicycle components, which is laborious. There are other types of connection between bicycle components as well. Removable battery-powered lights may, for example, be connected to the handlebar or the luggage rack of a bicycle in the following straightforward way: a securing means for the removable light is connected to the handlebar or the luggage rack by, for example, securely clipping the securing means to the frame or the luggage rack. This securing means then comprises two upright rails that extend opposite one another and at a distance from one another. These rails form a track with a first end and a second end, with the securing means comprising an end edge at the second end. The removable light comprises an attachment element that is slidable in a form-fitting manner between the rails from the first end up until the attachment element stops against said end edge. This is a connection that is easy to make. However, such types of connection are less suitable for bicycle components which have to stay connected to one another for a longer duration and on which substantial forces are exerted during cycling, because the risk of this type of connection unintentionally coming loose is higher than in the case of more conventional connections with bolts or screws. The connection between a bicycle mudguard and a rod that connects the bicycle mudguard to another bicycle component such as the frame, the luggage rack, the wheel axle, or the like, is a connection that is subjected to substantial forces when the bicycle is being used. A nut and a bolt are therefore often used for this connection. However, the position of the rod with respect to the mudguard depends on the type of the bicycle and on the size of the bicycle.

Document DE 20 2009 002729 U1 discloses an assembly according to the preamble of independent claims 1 and 2.

It is therefore an object of the invention to make it possible to connect bicycle components to one another in a straightforward manner in the desired position with respect to one another and without significant risk of the bicycle components unintentionally coming loose.

This object is achieved by providing an assembly of a first bicycle component and a second bicycle component, in which these bicycle components are mutually connectable and the first bicycle component comprises, to that end, a track with at least one elongate rail, in which the second bicycle component is connectable to the track and is slidable along this track, and in which the second bicycle component comprises a deforming element that, in a connected state of the two bicycle components, is rotatable around an axis that extends vertically with respect to the track between at least two positions, namely a first position in which the deforming element is slidable along the track, the at least one rail is in a base position and so the second bicycle component is slidably connected to the first bicycle component along the track, and a second position in which the deforming element is designed to act on the at least one rail so that this at least one rail is locally deformed with respect to the base position and sliding of the deforming element along the track is prevented and so the second bicycle component is connected to the first bicycle component in a fixed position, in which either the track comprises two rails that extend opposite one another and at a distance from one another, in which case the deforming element is designed to extend between the rails or around both rails in a connected state of the two bicycle components, or in which the track comprises only one rail, in which case the deforming element extends around this rail and comprises two upright pins that extend, in the first connected state, on either side of the rail and extend at a distance from one another viewed in the longitudinal direction of the rail.

In this case, there is then a first connected state in which the second bicycle component is slidably connected to the first bicycle component and the deforming element is in its first position. The deforming element is designed, in the first connected state of the bicycle components, to be rotated from its first position to its second position, in which the deforming element, via said pins, acts on the at least one rail at two locations and exerts a deforming force on these one or more rails at these locations, and deforms these one or more rails at two locations so that the bicycle components are fixed relative to one another in a desired position, resulting in the bicycle components attaining their second connected state. In the second connected state, the second bicycle component is prevented from sliding along the track with respect to the first bicycle component. The base position of the at least one rail is the position in which no external forces are exerted on the rail and the deforming element thus exerts no forces on the rail. As a result of the deforming element then acting on the at least one rail in the second position, the deforming element exerts forces on the rail, thereby locally deforming the rail. This at least one rail preferably extends in a longitudinal direction in the base position and, in the second position, the deforming element is preferably designed to act on the at least one rail so that this at least one rail is locally deformed with respect to the base position so that the entire rail as such locally deviates from the said longitudinal direction.

In the first connected state, the first bicycle component is already connected to the second bicycle component, but the bicycle components are still slidable with respect to one another. In this first connected state, it is possible to move the bicycle components into the desired relative position in a very straightforward manner, in order then, in this position, to rotate the deforming element to its second position so as to fix the second bicycle component with respect to the first bicycle component, thereby creating said second connected state. In this case, the second bicycle component is thus connectable to the first bicycle component in various positions, so that it is always possible to opt for the most desired position. In the second connected state, sliding of the second bicycle component is prevented so that, during normal use of the bicycle, the second bicycle component maintains its desired position with respect to the first bicycle component. The rotating of the deforming element about said axis, when the bicycle components are in the first connected state, may also take place in a straightforward manner. Thus, the deforming element may be embodied so that it can be rotated by means of a hand tool, such as a hex key. The deforming element may also be provided with a knob or the like that can be engaged by hand in order to rotate the deforming element. Potentially, the second bicycle components may be provided with one or more additional elements that additionally prevent the undesired rotation from the second position to the first position.

The first bicycle component may be any bicycle component to which it is desired to secure something. Thus, the first bicycle component may be a mudguard, a luggage rack, a frame, a handlebar, etc.

The track may comprise only one rail and is then a monorail. The deforming element then extends around this rail and comprises two upright pins that extend, in the first connected state, on either side of the rail and extend at a distance from one another, viewed in the longitudinal direction of the rail. When rotating from the first position to the second position, these pins will then press against the rail at two locations on the rail that are located at a distance from one another, viewed in the longitudinal direction, in order thus to deform the rail at two locations. These locations are remote from one another in the longitudinal direction of the rail. The pins are then located on either side of the rail and exert a deforming force on the rail in opposing directions.

The track may however also comprise two rails that extend next to one another and at a distance from one another. Thus, these two rails may extend substantially parallel to one another and extend in a straight or curved line, so that the second bicycle component is then slidable along this straight or curved line. What is meant by substantially parallel to one another is that they extend in directions that preferably form an angle with one another of less than 10°, even more preferably less than 5°, and even more preferably less than 1° and most preferably this means that they extend along the same direction or curve. Said axis then preferably extends substantially perpendicular to this straight line or substantially perpendicular to the tangent to this curve. What is meant by substantially perpendicular is preferably an angle of between 80° and 90°, even more preferably an angle of between 85° and 90° and even more preferably an angle of between 89° and 90° and most preferably an angle of 90°. The second bicycle component may also be any bicycle component that is then intended to be secured to a mudguard, a luggage rack, a frame, a handlebar, etc. This second bicycle component may then for example comprise a lighting element, be a securing element for a bag, be a securing element for a rod to a mudguard, be a securing element for a profile that is designed to extend on the inner wall surface of the mudguard in order thus to locally strengthen the mudguard and/or hide cables, a securing element for securing a fork to a mudguard, etc. The securing element then comprises for example components that are connectable to the legs of a fork.

If the track comprises two rails, the deforming of these rails may occur in various ways. If the deforming element extends slidably around both rails in the first connected state, the deforming element may locally press the rails inwards, thus towards one another, during the rotation from the first position to the second position. If the deforming element extends slidably between both rails in the first position, then the deforming element may locally press the rails outwards, thus away from one another, during the rotation from the first position to the second position. Thus, the deforming element may have, measured through said axis and along a plane perpendicular to this axis, a minimum dimension that substantially corresponds to the distance between the two rails in their base position and a maximum dimension that is slightly larger than the distance between the rails in their base position. Thus, the minimum dimension may be at most 3 mm smaller than said distance, preferably at most 1 mm and even more preferably at most 0.50 mm. What is meant by slightly larger is that the maximum dimension is at least 0.1 mm, preferably at least 0.2 mm and most preferably at least 0.3 mm larger than said distance. Thus, this maximum dimension may be 0.4 mm, 0.5 mm, 1 mm or 3 mm larger than said distance. Here, the rotation from the second position to the first position is also prevented by said rails, as a result of which the risk of an undesired rotation out of the second position is small during normal use of the bicycle.

One or both rails may be deformed and to that end are for example made of plastic, aluminium, etc. Thus, one or both rails may form part of a mudguard and may then for example be made via extrusion. Mudguards exhibit a certain degree of rigidity, but are still somewhat deformable, and as such these one or two rails are also deformable. The one or two rails exhibit a certain thickness, which is sufficient to provide a sturdy attachment in the second connected state, but which is not excessive, so that the one or two rails still have the required flexibility and the force required to locally deform the one or both rails is not excessive, so that the one or two rails can be deformed by means of human strength and optionally a hand tool. If there are two rails, one rail may be designed to be more rigid, so that then only one of the two rails is designed to be deformed by the deforming element. In the case of one rail, this rail may extend next to a more rigid component, in which case the deforming element is then for example designed to extend between the rail and this more rigid component in a connected state. This connection is a direct connection between the two said bicycle components. By using said track here, it is not necessary to drill any holes in the bicycle components in order to be able to connect these bicycle components to one another, resulting in such connections being more aesthetically pleasing and less laborious to create.

In one specific embodiment, the track comprises two rails that extend opposite one another and at a distance from one another and the deforming element is designed to extend between the rails or around both rails in a connected state of the two bicycle components. Preferably then, in said second position of the deforming element, the deforming element is designed to act on both said rails so as thus to locally deform both rails with respect to their base positions. In one specific embodiment, the second bicycle component is used to push the rails apart and thereby secure an additional bicycle component to the rails. This is useful, for example, if it is desired to a secure a (U-shaped) profile around the rails. By locally pushing the rails apart, the profile, when it extends around both rails, can be secured to the rails in a straightforward manner. Thus, it may be desired to reinforce a mudguard with an additional profile or to hide cables that extend on the inner wall surface (i.e. that directed towards the bicycle tyre) of the mudguard.

Furthermore according to the invention with this specific embodiment, the rails extend in a longitudinal direction and substantially parallel to one another at a distance from one another that is measured in a width direction perpendicular to this longitudinal direction, in which case, in the first position of the deforming element and in a connected state of the bicycle components, the deforming element is slidable along the rails in this longitudinal direction. This longitudinal direction may extend in a straight line, but may also extend along a curve or a circular arc. In this case, the track extends in the longitudinal direction. Because said axis extends vertically with respect to the track, it is in this case possible to ensure, simply by means of rotation, that the deforming element exerts forces on the rails so as to deform these rails in the width direction in order thus to prevent sliding in the longitudinal direction by rotating the deforming element from the first position to the second position.

Furthermore according to the invention, said axis extends substantially perpendicular to the plane that extends in the width direction and the tangent to the longitudinal direction at this axis. If the longitudinal direction extends in a straight line, the tangent always coincides with the longitudinal direction.

Preferably, in the specific embodiment, the deforming element is designed to extend between the rails in a connected state of the bicycle components and the deforming element comprises at least two different dimensions, and does so measured through the axis and viewed along a plane perpendicular to this axis, namely a first dimension that is substantially equal to or smaller than the distance measured between the two rails in their base position at the deforming element in a connected state of the bicycle components and a second dimension that is larger than said distance. In this case, the deforming element may for example be rotatably connected around said axis in a straightforward manner so that, in the first position, the deforming element is positioned so that the first dimension extends from rail to rail, thus in said width direction, in which case the deforming element is then designed to be positioned, after the rotation from the first position to the second position, so that the second dimension extends in said width direction from one rail to the other rail and thus the rails are locally pushed apart by the deforming element. Thus, the deforming element may have a substantially ellipse-shaped cross section along a plane perpendicular to the axis, in which case the axis extends substantially through the centre point. The eccentricity of this ellipse-shaped cross section is preferably less than 0.5, even more preferably less than 0.3, so that the rails are pushed outwards to a limited degree. Since the deforming element in this case extends between the rails, the second bicycle component may be embodied in a compact manner, for example in such a way that the second bicycle component substantially does not extend beyond the rails along a plane perpendicular to the axis in said connected state. This is useful when the second bicycle component serves, for example, as a securing element to secure another bicycle component to the first bicycle component. This is the case, for example, when the first bicycle component is a mudguard and the second bicycle component is used to secure a rod to the mudguard. This is also the case, for example, when the first bicycle component is a handlebar or a luggage rack and the second bicycle component is used to secure a lighting element to the first bicycle component. By means of such an assembly in which the second bicycle component serves as a securing element, two large bicycle components may be connected to one another in the desired relative position in a discreet manner. Thus, if the first bicycle component is a mudguard and the second bicycle component is a securing element for a rod to a mudguard, the rails may extend on an inner wall surface of the mudguard that is intended to be directed towards a bicycle tyre after installation on a bicycle.

Even more preferably, the deforming element comprises a disc with a base part and two pressing parts in which, viewed along a plane perpendicular to the axis, the base part extends between the two pressing parts, the two pressing parts are opposite one another and the base part is substantially circular in shape, and in which said first dimension is the diameter of the base part and said second dimension is larger than the diameter of the base part and in which said axis extends centrally through the disc. The deforming element is preferably this disc. The pressing parts may extend substantially 180° opposite one another, so that a rotation of the disc by 90° is enough to rotate from the first position to the second position. The disc and any other components of the second bicycle component may then be constructed so that only a rotation of 90° from the first position to the second position, and vice versa, is possible. The shape of the pressing parts is preferably such that the rails are pushed outwards in a gradual manner during the rotation from the first position to the second position. The disc itself may be provided with a central opening in which a hand tool, such as a hex key, can engage in order to effect the rotation. However, the deforming element may for example comprise not just the disc, but also an additional knob that is connected to the disc in order to allow the disc to be rotated.

In one preferred embodiment, the second bicycle component comprises a base element that is slidably connectable to said one or two rails, in which the deforming element is rotatably connected to the base element around an axis, in which, in a connected state of the bicycle components, this axis is said axis which extends vertically with respect to the track. The base element may then be designed to perform the function of the second bicycle component while the deforming element then only has to ensure that the second bicycle component can be fixed in the desired position with respect to the first bicycle component. Thus, when the second bicycle component serves as a securing element to secure a third bicycle component to the first bicycle component, the base element may then comprise a securing component so that the third bicycle component is securable to the first bicycle component by means of the second bicycle component. For example, if the first bicycle component is a handlebar, then the second bicycle component is for example a securing element for a lighting element. In this case, the base element of the second bicycle component may then be provided with a securing component to which the lighting element can be securely clipped. The first bicycle component may however also be a mudguard, in which case the second bicycle component is then a securing element for securing a rod to the mudguard, in which case the base element of the second bicycle component then comprises for example a channel/duct into which the rod is fittable.

Furthermore preferably, in the abovementioned specific embodiment, in a connected state of the bicycle components, the base element has a maximum dimension measured in the width direction that substantially corresponds to the maximum corresponding distance between the rails, so that the base element is slidably detained in a guided manner between the rails and that, in the first position of the deforming element, the deforming element extends within the contours of the base element, viewed in the width direction and that, in the second position, the deforming element extends beyond the contours of the base element, viewed in the width direction, on either side of the base element. Because the deforming element, in the second position, extends beyond the contours of the base element, viewed in the width direction, on either side of the base element, the deforming element will locally push the rails apart. This base element then ensures here the connection between the bicycle components in said first connected state, as a result of which it is very straightforward to rotate the deforming element to the second position.

The second bicycle component may also comprise just the deforming element. In that case, the deforming element has an additional function and then comprises for example an opening through which a securing element, such as a cable tie, may extend or comprises a push-button or the like to which a lighting element or the like is securable. If the track of the first bicycle component comprises two rails, the second bicycle component may for example also only be used to push the rails apart. By pushing the rails apart, it is possible for an element that extends loosely around both rails to be fixed to the rails.

Furthermore preferably, each rail is elongate and forms or comprises a groove that extends in the longitudinal direction and the base element comprises two mutually opposite projections that are designed to cooperate with a respective groove, in which case the projections are designed to engage in the grooves in said connected state of the bicycle components. Thus, the base element is slidably connected to the rails in a straightforward and guided manner and the second bicycle component is thus also easily slidable with respect to the first bicycle component in the first connected state of the bicycle components. By working with such grooves and projections, the second bicycle component will not unintentionally come loose from the first bicycle component when sliding the second bicycle component into the first connected state in order to reach the desired position of the second bicycle component with respect to the first bicycle component. In this case, the rotation of the deforming element from the first position in the first connected state to the second position is also straightforward , given that the second bicycle component will not come loose during this rotation in this case. Therefore, only the deforming element has to be rotated in order to reach the second connected state, in which case it might only be necessary to hold the second bicycle component so that it does not slide during the rotation.

Furthermore preferably, each rail forms or comprises a said groove which is U-shaped and the base element comprises two mutually opposite said projections which match a respective groove of the rails. The rails then have an L-shaped cross section, a T-shaped cross section, a mushroom-shaped cross-section, etc. If such rails extend vertically from a said inner wall surface or a said outer wall surface of a mudguard, then each rail forms, together with this wall surface, a U-shaped groove.

In one specific embodiment, the first bicycle component comprises a mudguard, and preferably, the first bicycle component then is a mudguard. A wide range of bicycle components are secured to a front mudguard or to a rear mudguard. Thus, lighting elements, a luggage rack, a rod, the frame, etc. may be secured to a mudguard. The position of various bicycle components with respect to a mudguard, and more specifically the position in the longitudinal direction of the mudguard, depends on the type of bicycle. It is therefore also desirable for it to be possible to secure, in a straightforward manner, other bicycle components to the mudguard in the desired position, viewed in the longitudinal direction of this mudguard, for which the assembly according to the invention is well suited. Metal mudguards, such as mudguards that are primarily made of aluminium, are typically made via extrusion. These mudguards comprise an inner wall surface that is intended to be directed towards the bicycle tyre in the assembled state of a bicycle and an outer wall surface that extends on the other side of this inner wall surface. It is straightforward to provide a said wall surface with rails that extend in the longitudinal direction and vertically from one of the wall surfaces via extrusion.

Furthermore preferably, the rails extend vertically from an inner wall surface of the mudguard that is intended to be directed towards a bicycle tyre after installation on a bicycle. The inner wall surface of the mudguard is less visible. If the second bicycle component is embodied in a sufficiently compact manner, the visibility of the second bicycle component is low, as a result of which this second bicycle component is then well suited to serve as a securing member to secure another bicycle component, such as a bicycle rod, to a mudguard.

Even more preferably, the rails extend in the longitudinal direction of the mudguard.

In the latter specific embodiment, the second bicycle component is preferably a securing member for securing a rod to the mudguard. The securing member then comprises said deforming element and optionally a said base element in addition. If the rails extend for example from the inner wall surface of the mudguard, then the base element may be designed so as to extend with one side substantially against this inner wall surface, in which case this side for example comprises a channel-shaped recess so that this channel-shaped recess is covered by the inner wall surface and the recess, together with the inner wall surface, forms a passage, the rod being intended to extend into this passage. In this case, the rod extends through said passage in the assembled state of the bicycle. The rod is thus clamped between the securing member and the mudguard. As a result, the risk of the rod unintentionally coming loose when the mudguard is under load is low and this connection is also aesthetically pleasing. Here, the upright rails additionally limit the movement of the rod through the passage.

An assembly according to this invention will be described in more detail in the following description. This description serves only to explain the features of the invention further and may thus not be seen as a limiting the scope of protection for the present invention defined in the claims of this patent application or the area of application thereof.

In this description, reference numerals are used to refer to the attached drawings, in which:
- ***Figure* 1** is a perspective depiction of an assembly of a mudguard and a securing member for securing a rod to a mudguard, in which the mudguard is shown only partially;
- ***Figure* 2** is a side view of the securing member shown in Figure 1;
- ***Figure 3*** is a top view of the securing member shown in Figure 1, in which the deforming element is in a first position;
- ***Figure* 4** is a top view of the securing member shown in Figure 1, in which the deforming element is in a second position;
- ***Figure* 5** is a bottom view of the securing member shown in Figure 1, in which the deforming element is in the first position;
- ***Figure* 6** is a bottom view of the securing member shown in Figure 1, in which the deforming element is in the second position;
- ***Figure* 7** is a perspective depiction of the part of the mudguard shown in Figure 1;
- ***Figure 8*** is a cut-away perspective view of the securing member shown in Figure 1;
- ***Figure* 9** is a cross section of the securing member secured to the rails of the mudguard, along a plane perpendicular to the axis around which the deforming element is rotatable, in which the deforming element is in the first position;
- ***Figure 10*** is a cross section of the securing member secured to the rails of the mudguard, along a plane perpendicular to the axis around which the deforming element is rotatable, in which the deforming element is in the second position;
- ***Figure 11*** is a perspective depiction of the assembly according to the invention shown in Figure 1 and of a rod that is secured to the mudguard by means of the securing member;
- ***Figure 12*** is a schematic representation of an alternative embodiment of an assembly according to the invention, in which the first bicycle component comprises one rail and only this rail is visible and the second bicycle component comprises a deforming element, in which the deforming element is shown schematically and in the first position;
- ***Figure 13*** is a schematic representation of the assembly shown in Figure 12, in the second position of the deforming element;
- ***Figure* 14** is a perspective depiction of a specific embodiment of an assembly according to the invention comprising a mudguard and a second bicycle component that is connectable to the mudguard, in which this second bicycle component is used to connect a fork to the mudguard and this fork is also shown;

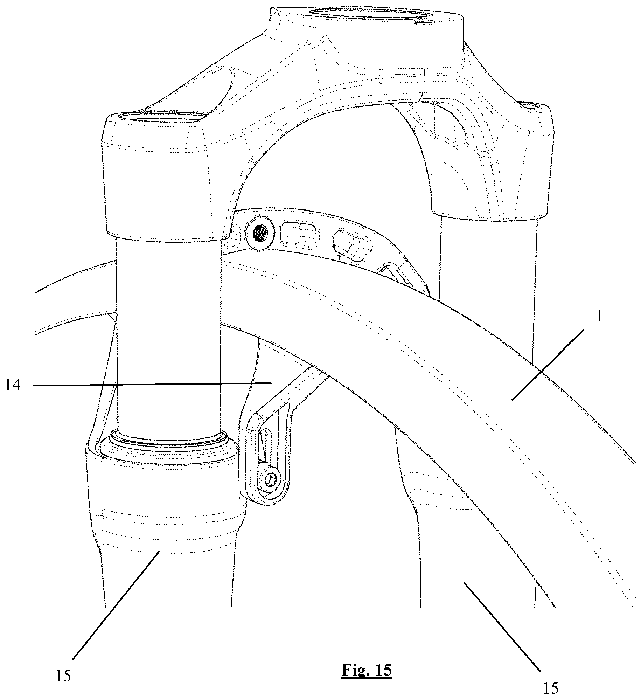

- ***Figure 15*** is another perspective depiction of the specific embodiment shown in Figure 14;
- ***Figure 16******,*** on the right-hand side, shows a cross section, as shown in Figure 9, of an assembly according to the invention comprising a mudguard and a securing member, in which the securing member comprises only a deforming element, and a U-shaped profile is secured to the mudguard, and, on the left-hand side, shows a cross section along the dashed line shown on the right-hand side, in which only the part of the mudguard is shown which extends between the rails and in which, both on the right-hand side and on the left-hand side, the deforming element is in the first position;
- ***Figure 17*** is a representation of Figure 16, in which the deforming element is in the second position.

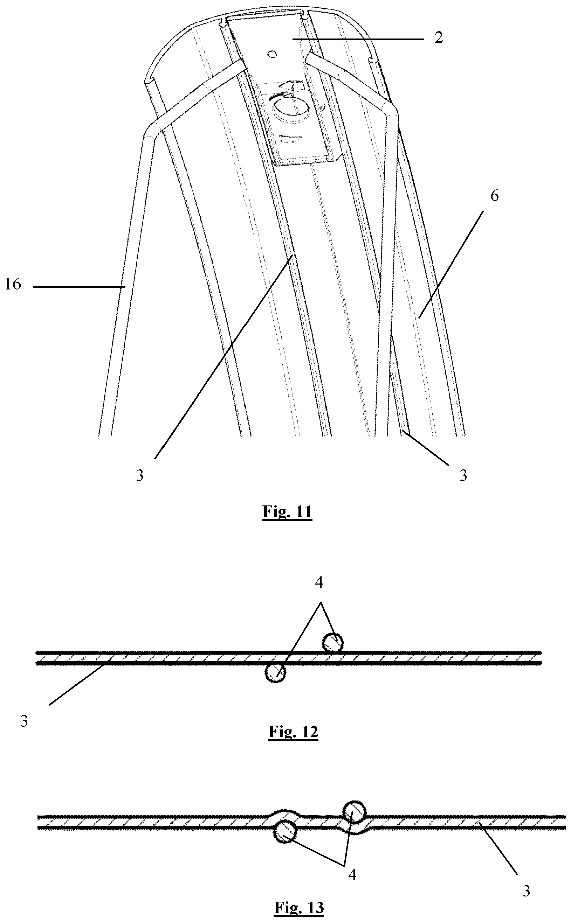

The figures show an assembly of a mudguard (1) and a securing member (2) for securing a rod (16) to the mudguard (1). Figure 11 shows how a rod (16) is securable to the mudguard (1) by means of the securing member (2). In this case, the securing member (2) is directly connectable to the mudguard (1). Here, the mudguard (1) then forms a first bicycle component (1) and the securing member (2) forms a second bicycle component (2), these bicycle components (1, 2) being connectable to one another and intended to be connected to one another on an assembled bicycle. The mudguard (1) comprises two rails (3) and the securing member (2) comprises a deforming element (4) and a base element (5) which together are securable to these rails (3), in order to create the mutual connection.

The mudguard (1) comprises an inner wall surface (6) that is intended to be directed towards a bicycle tyre and an outer wall surface (7) situated opposite this inner wall surface (6). The mudguard (1) extends in a curved longitudinal direction. The mudguard (1) comprises two rails (3) that each extend in said longitudinal direction and at a distance from one another, viewed in a width direction perpendicular to the longitudinal direction. These rails (3) extend from the inner wall surface (6) and thus form projections with respect to the inner wall surface (6) and they extend along the entire length of the mudguard (1). These rails (3) each have substantially the same cross section along their entire length, and this cross section is mushroom-shaped, namely in the shape of an upright rectangle with a cap on top, so that each rail (3) forms two U-shaped grooves together with the inner wall surface (6), with these grooves extending on either side of the rail (3) along the entire length of the mudguard (1).

The deforming element (4) is rotatably connected to the base element (5) around an axis of rotation (A).

The deforming element (4) is a substantially ellipse-shaped disc of limited eccentricity. This deforming element (4) here comprises a base part (11) with a circle-shaped cross section and two pressing parts (12), with the base part (11) extending between the pressing parts (12) and the pressing parts (12) extending opposite one another. The base part (11) comprises two mutually opposite indentations, making the cross section deviate slightly from an exact circle. The deforming element (4) centrally comprises a hexagonal opening (10) in which a hex key can engage in order to rotate the deforming element (4) with respect to the base element (5) around an axis (A) that extends centrally through the deforming element (4). The deforming element (4) and the base element (5) are constructed so that the deforming element (4) can be rotated by an angle of 90° between a first position and a second position. The base element (5) is elongate and is designed to extend between the rails (3) so that the longitudinal direction of the base element (5) extends in the longitudinal direction of the rails (3) in a connected state of the mudguard (1) and the securing member (2). The base element (5) also has a certain width that is intended to extend in said width direction in a connected state. The diameter of the base part (11) of the disc substantially corresponds to the width of the base element (5) and the deforming element (4) is rotatably connected to the base element (5) so that, in the first position, the pressing parts (12) extend centrally with respect to the base element (5) viewed in the width direction and the deforming element (4) extends within the contours of the base element (5) viewed in the width direction, while, in the second position, the pressing parts (12) extend at the edges of the base element (5) and extend beyond the contours of the base element (5), viewed in the width direction, on either side of the base element (5). The rotation is limited to 90°, between said states. The that end, the base element (5) comprises stop parts with which the pressing parts (12) come into contact during the rotation and thus the rotation is limited and cannot go beyond the first position in the case of a rotation from the second position to the first position. The indentations of the base part (11) and elements of the base element (5) that are designed to engage in these indentations prevent rotation beyond the second position in the case of a rotation from the first position to the second position, and also impede the rotation from the second position back to the first position.

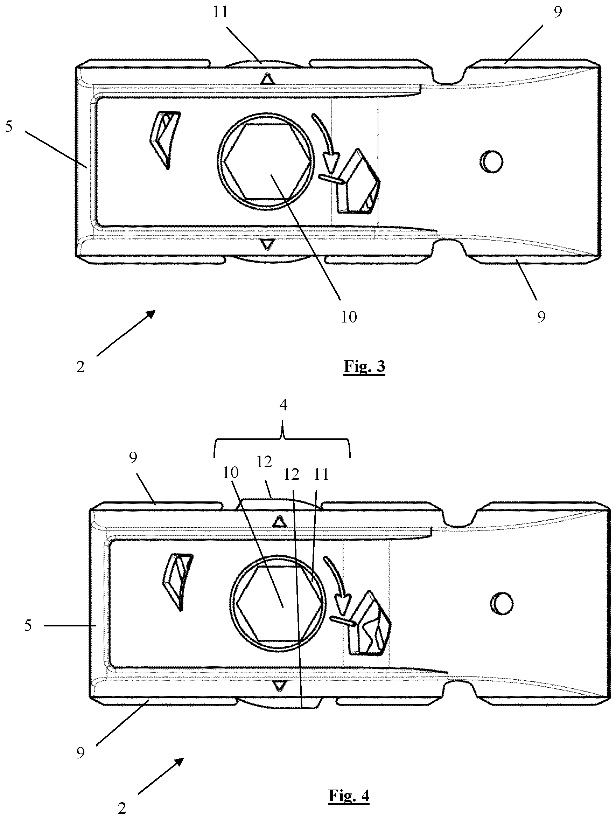

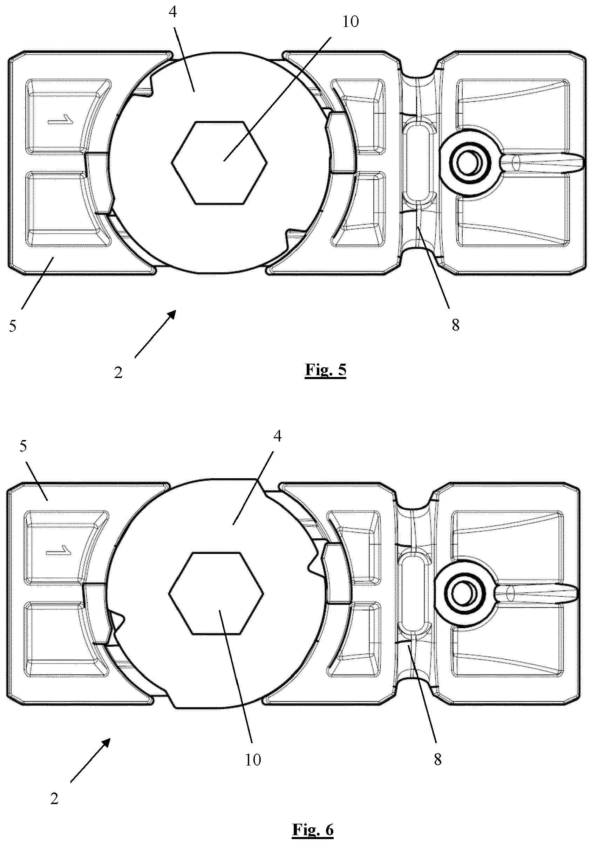

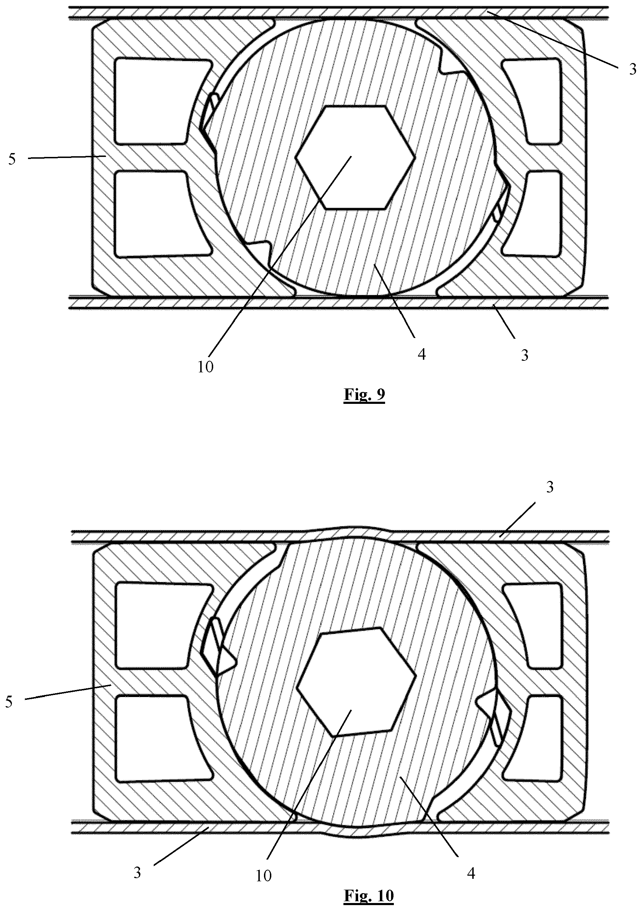

The edges of the base element (5) are each formed by a projection (9) that extends in the longitudinal direction of the base element (5) and that is form-fitting with respect to a respective groove of the mutually opposite and facing grooves of the mudguard (1) that are formed by the inner wall surface (6) and the rails (3), and the distance between these projections (9) is such that the base element is slidable between the rails (3) in a form-fitting manner, with the projections (9) extending essentially in said mutually opposite and facing grooves in a connected state of the mudguard (1) and the securing member (2). The securing member (2) is therefore slidably connectable to the mudguard (1) by means of the base element (5). As has already been described above, the deforming element (4) is rotatably connected to the base element (5) and is dimensioned so that, in a connected state and viewed in the width direction, in the first position of the deforming element (4), the deforming element (4) does not extend beyond the base element (5), viewed in the width direction, and thus the securing member (2) is easily slidable along the rails (3). In the second position of the deforming element (4), the deforming element (4) extends beyond the base element (5), viewed in the width direction, on either side of the base element (5) in order thus to push the rails (3) apart locally. This is clearly visible in Figures 3, 4, 5, 6, 9 and 10, in which Figures 3, 5 and 9 show the situation in the first position of the deforming element (4) and it is visible that the rails (3) are in their base position (Figure 9), and in which Figures 4, 6 and 10 show the situation in the second position of the deforming element (4) and it is visible that the rails (3) are locally pushed apart (Figure 10). The axis of rotation (A) of the deforming element (4) extends, in a connected state of the mudguard (1) and the securing member (2), perpendicular to a plane formed by said width direction and a tangent to the longitudinal direction at this axis of rotation (A).

The base element (5) comprises a slot (8) that is suitable for accommodating a portion of a rod (16). In order to secure a rod (16) to the mudguard (1), the rod (16) is placed in this slot (8), after which the securing member (2) is slid between the rails (3) of the mudguard (1) while the deforming element (4) is in the first position. The securing member (2) is slid with respect to the mudguard (1) until the desired position of the rod (16) with respect to the mudguard (1) is reached. The deforming element (4) is then rotated by means of a hex key and the securing member (2) is thus fixed in the desired position with respect to the mudguard (1). This is a very straightforward and furthermore aesthetically pleasing way in which to secure a rod (16) to a mudguard (1).

In the case of the alternative embodiment shown in Figures 12 and 13, the first bicycle component (1) comprises only one rail (3) and the track is thus a monorail (3). The deforming element (4) of the second bicycle component (2) here deforms this one rail (3) during the rotation from the first position to the second position. The deforming element (4) extends around the rail (3) and comprises two upright pins that extend, in the first connected state, on either side of the rail (3) and extend at a distance from one another, viewed in the longitudinal direction of the rail (3) (see Figure 12). When rotating from the first position to the second position, these pins will then press against the rail (3) at two locations on the rail (3) that are located at a distance apart, viewed in the longitudinal direction, so as thus to deform the rail (3) (see Figure 13).

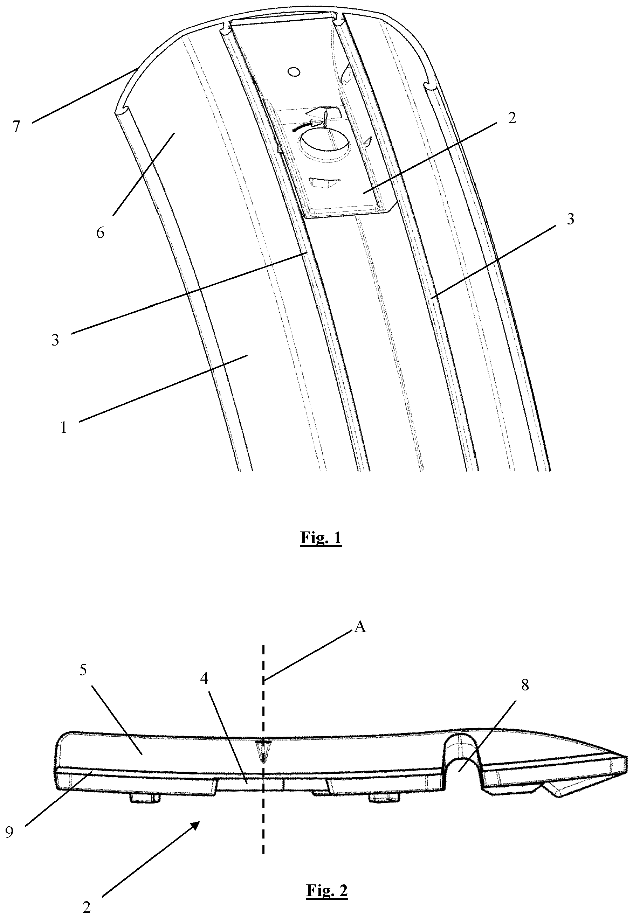

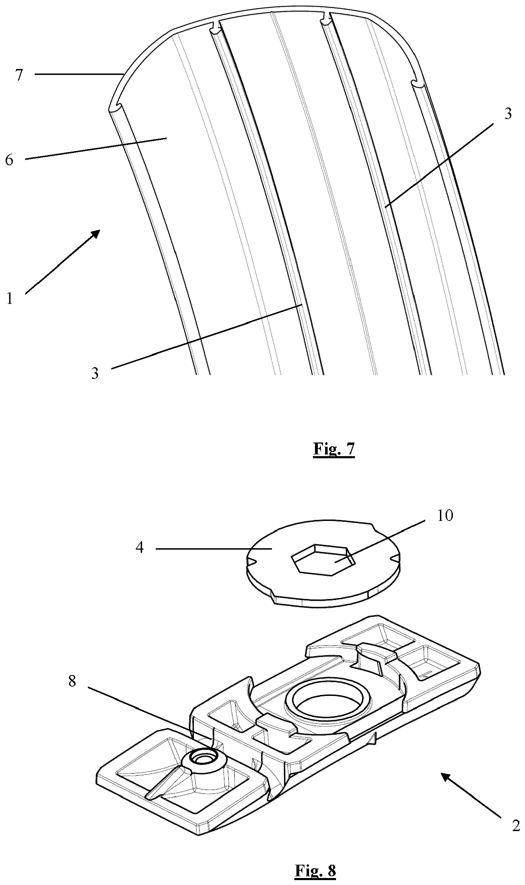

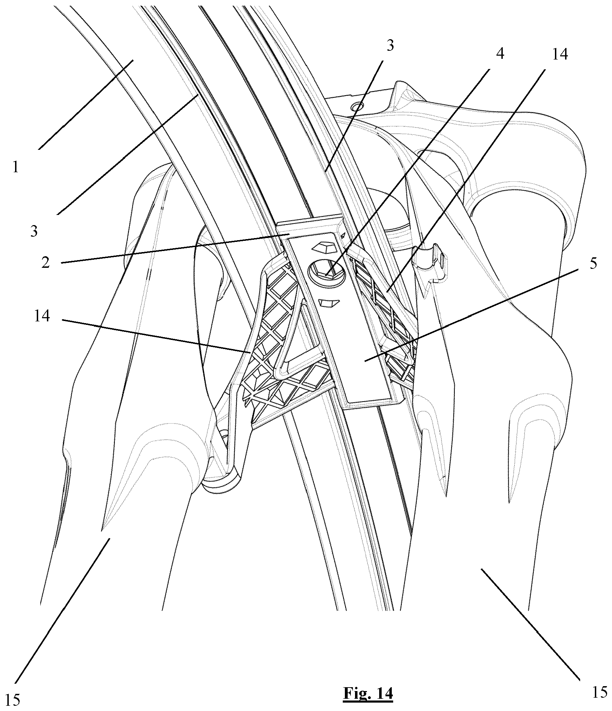

Figure 14 shows a specific assembly and a fork. The fork comprises a bridge that is located above the mudguard (1) and two legs (15) that extend downwards from the bridge on either side of the mudguard (1). The legs (15) are then intended to be connected to the wheel axle (not shown). The fork is secured to the mudguard (1) by means of the second bicycle component (2). The mudguard (1) is constructed like the mudguard (1) shown in Figures 1 and 7. The second bicycle component (2) comprises a deforming element (4) and a base element (5) constructed in a similar manner to the deforming element (4) and the base element (5) shown in Figures 3, 4, 5, 6 and 8 and also attachment elements (14) that are connected to the base element (5). The second bicycle component (2) is connectable to the mudguard (1) in the desired position by means of the base element (5) and the deforming element (4). In this case, the design of the base element (5) and the deforming element (4) may also be constructed in another manner that comes under the scope of protection of this patent.

In a connected state of the second bicycle component (2) and the mudguard (1), said attachment elements (14) of the second bicycle component (2) extend respectively to the left and to the right from the mudguard (1), so that the second bicycle component (2) is then intended to extend between the legs (15) of the fork. These attachment elements (14) are secured to the respective legs (15) of the fork by means of screws and this securing arrangement is preferably height-adjustable. This securing arrangement is height-adjustable because the screws extend through elongate openings of the attachment elements (14), although this is not essential. This makes for an aesthetically pleasing connection of the fork to the mudguard (1) and it is also a stable connection. Additional advantages are that the mudguard (1) can be connected to the fork at various locations, these locations do not have to be known beforehand when producing the mudguard (1), and that the position of the mudguard (1) is easily height-adjustable. Alternative embodiments with for example only one rail are also possible here.

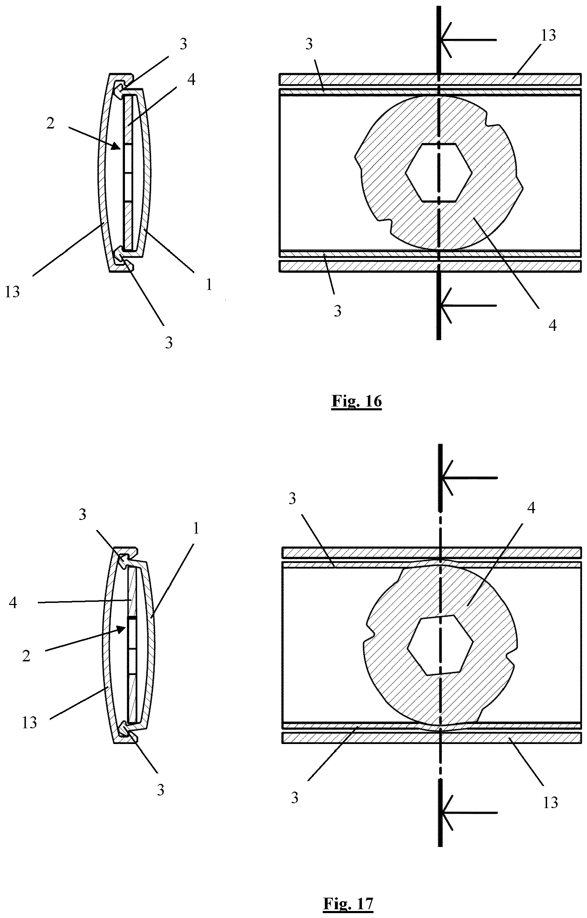

Figures 16 and 17 show how an assembly according to the invention is also usable to secure a U-shaped profile (13) to a mudguard (1). In this case, the mudguard (1) is constructed as shown in Figure 7, but is only shown partially. In this case, the second bicycle component (2) is used to locally push the rails (3) of the mudguard (1) apart by rotation from the first position to the second position. Here, this second bicycle component (2) comprises only a deforming element (4) that is similar to the deforming element (4) shown in Figures 9 and 10. The profile (13) is placeable around both rails (3) when the deforming element (4) is in the first position (see Figure 16), and by rotating the deforming element (4) from the first position to the second position, the rails (3) are locally pushed apart, resulting in the profile (13) being fixed to the rails (3) and thus connected to the mudguard (1) (Figure 17).

## Claims

1. Assembly of a first bicycle component (1) and a second bicycle component (2), in which these bicycle components (1, 2) are mutually connectable and the first bicycle component (1) comprises, to that end, a track with two elongate rails (3), in which the second bicycle component (2) is connectable to the track and is slidable along this track, wherein said two rails (3) extend opposite one another in a longitudinal direction and extend substantially parallel to one another at a distance from one another that is measured in a width direction perpendicular to this longitudinal direction, and in which the second bicycle component (2) comprises a deforming element (4) that is designed to extend between the rails (3) or around both rails (3) in a connected state of the two bicycle components (1, 2), **characterized in that**, in the connected state of the two bicycle components (1, 2), the deforming element (4) is rotatable around an axis (A) that extends vertically with respect to the track and substantially perpendicular to the plane that extends in the width direction and the tangent to the longitudinal direction at said axis (A), between at least two states, namely a first state in which the deforming element (4) is slidable along the track the rails (3) are in a base position and so the second bicycle component (2) is slidably connected to the first bicycle component (1) along the track, and a second state in which the deforming element (4) is designed to act on at least one of said two rails (3) so that this rail (3) is locally deformed with respect to the base position and sliding of the deforming element (4) along the track is prevented and so the second bicycle component (2) is connected to the first bicycle component (1) in a fixed position.

2. Assembly of a first bicycle component (1) and a second bicycle component (2), in which these bicycle components (1, 2) are mutually connectable and the first bicycle component (1) comprises, to that end, a track with one elongate rail (3), in which the second bicycle component (2) is connectable to the track and is slidable along this track, **characterized in that** the track comprises only one rail (3), and in which the second bicycle component (2) comprises a deforming element (4) that extends around this rail (3), and that, in a connected state of the two bicycle components (1, 2), the deforming element (4) is rotatable around an axis (A) that extends vertically with respect to the track between at least two states , namely a first state in which the deforming element (4) is slidable along the track, the rail (3) is in a base position and so the second bicycle component (2) is slidably connected to the first bicycle component (1) along the track and a second state in which the deforming element (4) is designed to act on the rail (3) so that this rail (3) is locally deformed with respect to the base position and sliding of the deforming element (4) along the track is prevented and so the second bicycle component (2) is connected to the first bicycle component (1) in a fixed position and in which the deforming element comprises two upright pins that extend, in the first state, on either side of the rail (3) and at a distance from one another, viewed in the longitudinal direction of the rail (3), in which, when rotating from the first state to the second state, these pins press against the rail (3) and do so at two locations on the rail (3) that are located at a distance from one another, viewed in the longitudinal direction, so as thus to deform the rail (3).

3. Assembly according to Claim 1, **characterized in that**, in said second state of the deforming element (4), the deforming element (4) is designed to act on both said rails (3) so as thus to locally deform both rails (3) with respect to their base positions.

4. Assembly according to Claim 1 or according to Claim 1 and 3 , **characterized in that** the deforming element (4) is designed to extend between the rails (3) in the connected state of the bicycle components (1, 2) and that the deforming element (4) comprises at least two different dimensions, and does so measured through the axis (A) and viewed along a plane perpendicular to this axis, namely a first dimension that is substantially equal to or smaller than the distance measured between the two rails (3) in their base position at the deforming element (4) in the connected state of the bicycle components (1, 2) and a second dimension that is larger than said distance.

5. Assembly according to Claim 4, **characterized in that** the deforming element (4) comprises a disc with a base part (11) and two pressing parts (12) in which, viewed along a plane perpendicular to the axis, the base part (11) extends between the two pressing parts (12), the two pressing parts (12) are opposite one another and the base part (11) is substantially circular in shape, and that said first dimension is the diameter of the base part (11) and said second dimension is larger than the diameter of the base part (11) and in which said axis (A) extends centrally through the disc.

6. Assembly according to one of the preceding claims, **characterized in that** the second bicycle component (2) comprises a base element (5) that is slidably connected to said one or two rails (3), in which the deforming element (4) is rotatably connected to the base element (5) around an axis, in which, in the connected state of the bicycle components (1, 2), this axis (A) is said axis (A) which extends vertically with respect to the track.

7. Assembly according to Claim 4 or 5, **characterized in that** the second bicycle component (2) comprises a base element (5) that is slidably connected to said rails (3), in which said deforming element (4) is rotatably connected to the base element (5) around an axis, in which, in a connected state of the bicycle components (1, 2), this axis (A) is said axis (A) which extends vertically with respect to the track, and that, in the a connected state of the bicycle components (1, 2), the base element (5) has a maximum dimension measured in the width direction that substantially corresponds to the maximum corresponding distance between the rails (3) so that the base element (5) is slidable in a guided manner between the rails (3) and that, in the first state of the deforming element (4), the deforming element (4) extends within the contours of the base element (5) viewed in the width direction and that, in the second state , the deforming element (4) extends beyond the contours of the base element (5), viewed in the width direction, on either side of the base element (5).

8. Assembly according to Claim 7, **characterized in that** each rail (3) is elongate and forms a groove that extends in the longitudinal direction and the base element (5) comprises two mutually opposite projections (9) that match said grooves, in which the projections (9) are designed to engage in the grooves in the connected state of the bicycle components (1, 2).

9. Assembly according to one of the preceding claims, **characterized in that** the first bicycle component (1) is a mudguard (1).

10. Assembly according to Claim 9, **characterized in that** each rail (3) extends vertically from an inner wall surface (6) of the mudguard (1) that is intended to be directed towards a bicycle tyre after installation on a bicycle.

11. Assembly according to Claim 10, **characterized in that** each rail (3) extends in the longitudinal direction of the mudguard (1).

## Patentansprüche

1. Anordnung mit einer ersten Fahrradkomponente (1) und einer zweiten Fahrradkomponente (2), wobei diese Fahrradkomponenten (1, 2) miteinander verbindbar sind und die erste Fahrradkomponente (1) zu diesem Zweck eine Laufbahn mit zwei längs erstreckten Schienen (3) umfasst, wobei die zweite Fahrradkomponente (2) mit der Laufbahn verbindbar und entlang dieser Laufbahn verschiebbar ist, wobei sich die zwei Schienen (3) gegenüberliegen und sich in einer Längsrichtung erstrecken und sich im Wesentlichen parallel zueinander in einem Abstand zueinander erstrecken, der in einer zu dieser Längsrichtung rechtwinklig verlaufenden Breitenrichtung gemessen ist, und wobei die zweite Fahrradkomponente (2) ein Verformungselement (4) umfasst, das dazu ausgelegt ist, sich zwischen den Schienen (3) oder um beide Schienen (3) herum in einem verbundenen Zustand der zwei Fahrradkomponenten (1, 2) zu erstrecken, **dadurch gekennzeichnet, dass**
das Verformungselement (4) in dem verbundenen Zustand der zwei Fahrradkomponenten (1, 2) um eine Achse (A) drehbar ist, die sich in Bezug auf die Laufbahn vertikal und im Wesentlichen rechtwinklig zu der Ebene erstreckt, die sich in der Breitenrichtung und der Tangente zur Längsrichtung an der Achse (A) erstreckt, zwischen wenigstens zwei Zuständen, nämlich einem ersten Zustand, in dem das Verformungselement (4) entlang der Laufbahn verschiebbar ist und sich die Schienen (3) in einer Basisposition befinden und die zweite Fahrradkomponente (2) somit entlang der Laufbahn verschiebbar mit der ersten Fahrradkomponente (1) verbunden ist, und einem zweiten Zustand, in dem das Verformungselement (4) dazu ausgelegt ist, so auf wenigstens eine der zwei Schienen (3) einzuwirken, dass diese Schiene (3) lokal in Bezug auf die Basisposition verformt wird und ein Verschieben des Verformungselements (4) entlang der Laufbahn vermieden wird und die zweite Fahrradkomponente (2) somit in einer festen Position mit der ersten Fahrradkomponente (1) verbunden ist.

2. Anordnung mit einer ersten Fahrradkomponente (1) und einer zweiten Fahrradkomponente (2), wobei diese Fahrradkomponenten (1, 2) miteinander verbindbar sind und die erste Fahrradkomponente (1) zu diesem Zweck eine Laufbahn mit einer längs erstreckten Schiene (3) umfasst, wobei die zweite Fahrradkomponente (2) mit der Laufbahn verbindbar und entlang dieser Laufbahn verschiebbar ist, **dadurch gekennzeichnet, dass** die Laufbahn nur eine Schiene (3) umfasst, und wobei die zweite Fahrradkomponente (2) ein Verformungselement (4) umfasst, das sich um diese Schiene (3) herum erstreckt, und dass das Verformungselement (4) in einem verbundenen Zustand der zwei Fahrradkomponenten (1, 2) um eine Achse (A) drehbar ist, die sich in Bezug auf die Laufbahn zwischen wenigstens zwei Zuständen vertikal erstreckt, nämlich einem ersten Zustand, in dem das Verformungselement (4) entlang der Laufbahn verschiebbar ist und sich die Schiene (3) in einer Basisposition befindet und die zweite Fahrradkomponente (2) somit entlang der Laufbahn verschiebbar mit der ersten Fahrradkomponente (1) verbunden ist, und einem zweiten Zustand, in dem das Verformungselement (4) dazu ausgelegt ist, so auf die Schiene (3) einzuwirken, dass diese Schiene (3) in Bezug auf die Basisposition lokal verformt wird und ein Verschieben des Verformungselements (4) entlang der Laufbahn vermieden wird und die zweite Fahrradkomponente (2) somit in einer festen Position mit der ersten Fahrradkomponente (1) verbunden ist und wobei das Verformungselement zwei aufrecht stehende Stifte umfasst, die sich in dem ersten Zustand auf jeder Seite der Schiene (3) und in einem Abstand zueinander in der Längsrichtung der Schiene (3) gesehen erstrecken, wobei diese Stifte, wenn sie sich aus dem ersten Zustand in den zweiten Zustand drehen, gegen die Schiene (3) drücken und dies an zwei Stellen der Schiene (3) tun, die sich in einem Abstand zueinander in der Längsrichtung gesehen befinden, um somit die Schiene (3) zu verformen.

3. Anordnung gemäß Anspruch 1, **dadurch gekennzeichnet, dass** in dem zweiten Zustand des Verformungselements (4) das Verformungselement (4) dazu ausgelegt ist, auf beide Schienen (3) einzuwirken, um somit beide Schienen (3) in Bezug auf deren Basispositionen lokal zu verformen.

4. Anordnung nach Anspruch 1 oder nach Anspruch 1 und 3, **dadurch gekennzeichnet, dass** das Verformungselement (4) dazu ausgelegt ist, sich in dem verbundenen Zustand der Fahrradkomponenten (1, 2) zwischen den Schienen (3) zu erstrecken, und dass das Verformungselement (4) wenigstens zwei unterschiedliche Abmessungen umfasst und dies gemessen durch die Achse (A) und entlang einer rechtwinklig zu dieser Achse verlaufenden Ebene gesehen tut, nämlich eine erste Abmessung, die im Wesentlichen gleich oder kleiner als der Abstand ist, der zwischen den zwei Schienen (3) in ihrer Basisposition an dem Verformungselement (4) in dem verbundenen Zustand der Fahrradkomponenten (1, 2) gemessen ist, und eine zweite Abmessung, die größer als der Abstand ist.

5. Anordnung nach Anspruch 4, **dadurch gekennzeichnet, dass** das Verformungselement (4) eine Scheibe mit einem Basisteil (11) und zwei Druckteilen (12) umfasst, wobei sich der Basisteil (11) entlang einer rechtwinklig zu der Achse verlaufenden Ebene gesehen zwischen den zwei Druckteilen (12) erstreckt, wobei sich die zwei Druckteile (12) gegenüber liegen und der Basisteil (11) im Wesentlichen eine kreisförmige Form aufweist, und dass es sich bei der ersten Abmessung um den Durchmesser des Basisteils (11) handelt und die zweite Abmessung größer als der Durchmesser des Basisteils (11) ist und wobei sich die Achse (A) zentral durch die Scheibe erstreckt.

6. Anordnung nach einem der vorhergehenden Ansprüche, **dadurch gekennzeichnet, dass** die zweite Fahrradkomponente (2) ein Basiselement (5) umfasst, das verschiebbar mit der einen oder zwei Schienen (3) verbunden ist, wobei das Verformungselement (4) um eine Achse drehbar mit dem Basiselement (5) verbunden ist, wobei es sich bei dieser Achse (A) in dem verbundenen Zustand der Fahrradkomponenten (1, 2) um die Achse (A) handelt, die sich in Bezug auf die Laufbahn vertikal erstreckt.

7. Anordnung nach Anspruch 4 oder 5, **dadurch gekennzeichnet, dass** die zweite Fahrradkomponente (2) ein Basiselement (5) umfasst, das mit den Schienen (3) verschiebbar verbunden ist, wobei das Verformungselement (4) um eine Achse drehbar mit dem Basiselement (5) verbunden ist, wobei es sich bei dieser Achse (A) in einem verbundenen Zustand der Fahrradkomponenten (1, 2) um die Achse (A) handelt, die sich in Bezug auf die Laufbahn vertikal erstreckt, und dass das Basiselement (5) in dem verbundenen Zustand der Fahrradkomponenten (1, 2) eine in der Breitenrichtung, die im Wesentlichen dem maximalen entsprechenden Abstand zwischen den Schienen (3) entspricht, gemessene maximale Abmessung aufweist, so dass das Basiselement (5) auf eine geführte Weise zwischen den Schienen (3) verschiebbar ist, und dass sich das Verformungselement (4) in dem ersten Zustand des Verformungselements (4) innerhalb der Konturen des Basiselements (5) in der Breitenrichtung gesehen erstreckt und dass sich das Verformungselement (4) in dem zweiten Zustand über die Konturen des Basiselements (5) hinaus in der Breitenrichtung gesehen auf jeder Seite des Basiselements (5) erstreckt.

8. Anordnung nach Anspruch 7, **dadurch gekennzeichnet, dass** jede Schiene (3) längs erstreckt ist und eine Rille bildet, die sich in der Längsrichtung erstreckt und das Basiselement (5) zwei sich gegenüberliegende Vorsprünge (9) umfasst, die den Rillen entsprechen, wobei die Vorsprünge (9) dazu ausgelegt sind, in dem verbundenen Zustand der Fahrradkomponenten (1, 2) mit dem Rillen einzugreifen.

9. Anordnung nach einem der vorhergehenden Ansprüche, **dadurch gekennzeichnet, dass** es sich bei der ersten Fahrradkomponente (1) um ein Schutzblech (1) handelt.

10. Anordnung nach Anspruch 9, **dadurch gekennzeichnet, dass** sich jede Schiene (3) vertikal von einer Innenwandfläche (6) des Schutzblechs (1) erstreckt, die nach der Anbringung an einem Fahrrad in Richtung eines Fahrradreifens gerichtet sein soll.

11. Anordnung nach Anspruch 10, **dadurch gekennzeichnet, dass** sich jede Schiene (3) in der Längsrichtung des Schutzblechs (1) erstreckt.

## Revendications

1. Assemblage d'un premier composant de bicyclette (1) et d'un second composant de bicyclette (2), dans lequel ces composants de bicyclette (1, 2) sont mutuellement connectables et le premier composant de bicyclette (1) comprend, à cette fin, une piste avec deux rails allongés (3), dans lequel le second composant de bicyclette (2) est connectable à la piste et est coulissant le long de cette piste, dans lequel ces deux rails (3) s'étendent opposés l'un par rapport à l'autre dans une direction longitudinale et s'étendent sensiblement parallèlement l'un à l'autre à une certaine distance l'un de l'autre qui est mesurée dans une direction de largeur perpendiculaire à cette direction longitudinale, et dans lequel le second composant de bicyclette (2) comprend un élément déformable (4) qui est conçu pour s'étendre entre les rails (3) ou autour des deux rails (3) dans un état connecté des deux composants de bicyclette (1, 2), **caractérisé en ce que**, dans l'état de connexion des deux composants de bicyclette (1, 2), l'élément déformable (4) est rotatif autour d'un axe (A) qui s'étend verticalement par rapport à la piste et sensiblement perpendiculaire au plan qui s'étend dans la direction de la largeur et la tangente à la direction longitudinale au niveau dudit axe (A), entre au moins deux états, à savoir un premier état dans lequel l'élément déformable (4) peut coulisser le long de la piste, les rails (3) étant en position de base et le second élément de bicyclette (2) étant ainsi connecté de manière coulissante au premier élément de bicyclette (1) le long de la piste, et un second état dans lequel l'élément déformable (4) est conçu pour agir sur au moins l'un des deux rails (3) de sorte que ce rail (3) est localement déformé par rapport à la position de base et que le coulissement de l'élément déformable (4) le long de la piste est empêché, de sorte que le second composant de bicyclette (2) est connecté au premier composant de bicyclette (1) dans une position fixe.

2. Assemblage d'un premier composant de bicyclette (1) et d'un second composant de bicyclette (2), dans lequel ces composants de bicyclette (1, 2) sont mutuellement connectables et le premier composant de bicyclette (1) comprend, à cette fin, une piste avec un rail allongé (3), dans lequel le second composant de bicyclette (2) est connectable à la piste et est coulissant le long de cette piste, **caractérisé en ce que** la piste comprend un seul rail (3), et que le second composant de bicyclette (2) comprend un élément déformable (4) qui s'étend autour de ce rail (3), et que, dans un état de connexion des deux composants de bicyclette (1, 2), l'élément déformable (4) est rotatif autour d'un axe (A) qui s'étend verticalement par rapport à la piste entre au moins deux états, à savoir un premier état dans lequel l'élément déformable (4) est coulissant le long de la piste, le rail (3) est dans une position de base et le second élément de bicyclette (2) est ainsi connecté de manière coulissante au premier élément de bicyclette (1) le long de la piste et un second état dans lequel l'élément déformable (4) est conçu pour agir sur le rail (3) de manière à ce que ce rail (3) est localement déformé par rapport à la position de base et que le coulissement de l'élément déformable (4) le long de la piste est empêché, de sorte que le second composant de bicyclette (2) est connecté au premier composant de bicyclette (1) dans une position fixe, et dans lequel l'élément déformable comprend deux broches verticales qui s'étendent, dans le premier état, de part et d'autre du rail (3) et à distance l'une de l'autre, vues dans la direction longitudinale du rail (3), dans lequel, lors de la rotation du premier état vers le second état, ces broches appuient sur le rail (3) et ce, en deux endroits du rail (3) situés à distance l'un de l'autre, vues dans la direction longitudinale, de manière à déformer le rail (3) .

3. Assemblage selon la revendication 1, **caractérisé en ce que**, dans ce second état de l'élément déformable (4), l'élément déformable (4) est conçu pour agir sur les deux rails (3) de manière à déformer localement les deux rails (3) par rapport à leurs positions de base.

4. Assemblage selon la revendication 1 ou selon les revendications 1 et 3, **caractérisé en ce que** l'élément déformable (4) est conçu pour s'étendre entre les rails (3) à l'état connecté des composants de la bicyclette (1, 2) et **en ce que** l'élément déformable (4) comprend au moins deux dimensions différentes, et ce, mesurées à travers l'axe (A) et vues le long d'un plan perpendiculaire à cet axe, à savoir une première dimension qui est sensiblement égale ou inférieure à la distance mesurée entre les deux rails (3) dans leur position de base au niveau de l'élément déformable (4) à l'état connecté des composants de la bicyclette (1, 2) et une seconde dimension qui est supérieure à ladite distance.

5. Assemblage selon la revendication 4, **caractérisé en ce que** l'élément déformable (4) comprend un disque avec une partie de base (11) et deux parties de pression (12) dans lequel, vu le long d'un plan perpendiculaire à l'axe, la partie de base (11) s'étend entre les deux parties de pression (12), les deux parties de pression (12) sont opposées l'une à l'autre et la partie de base (11) est de forme sensiblement circulaire, et que ladite première dimension est le diamètre de la partie de base (11) et ladite seconde dimension est plus grande que le diamètre de la partie de base (11) et dans lequel ledit axe (A) s'étend de façon centrale à travers le disque.

6. Assemblage selon l'une des revendications précédentes, **caractérisé en ce que** le second composant de bicyclette (2) comprend un élément de base (5) qui est connecté de manière coulissante audit un ou deux rails (3), dans lequel l'élément déformable (4) est connecté de manière rotative à l'élément de base (5) autour d'un axe, dans lequel, à l'état connecté des composants de bicyclette (1, 2), cet axe (A) est ledit axe (A) qui s'étend verticalement par rapport à la piste.

7. Assemblage selon la revendication 4 ou 5, **caractérisé en ce que** le second composant de bicyclette (2) comprend un élément de base (5) qui est connecté de manière coulissante auxdits rails (3), dans lequel ledit élément déformable (4) est connecté de manière rotative à l'élément de base (5) autour d'un axe, dans lequel, dans un état connecté des composants de bicyclette (1, 2), cet axe (A) est ledit axe (A) qui s'étend verticalement par rapport à la piste, et que, dans l'état connecté des composants de la bicyclette (1, 2), l'élément de base (5) a une dimension maximale mesurée dans la direction de la largeur qui correspond sensiblement à la distance maximale correspondante entre les rails (3) de sorte que l'élément de base (5) est coulissant de manière guidée entre les rails (3) et que, dans le premier état de l'élément déformable (4), l'élément déformable (4) s'étend à l'intérieur des contours de l'élément de base (5) vu dans la direction de la largeur et que, dans le second état, l'élément déformable (4) s'étend au-delà des contours de l'élément de base (5), vu dans la direction de la largeur, de part et d'autre de l'élément de base (5).

8. Assemblage selon la revendication 7, **caractérisé en ce que** chaque rail (3) est allongé et forme une rainure qui s'étend dans la direction longitudinale et que l'élément de base (5) comprend deux saillies (9) mutuellement opposées qui correspondent à ces rainures, dans lequel les saillies (9) sont conçues pour s'engager dans les rainures à l'état connecté des composants de la bicyclette (1, 2).

9. Assemblage selon l'une des revendications précédentes, **caractérisé en ce que** le premier composant de bicyclette (1) est un garde-boue (1).

10. Assemblage selon la revendication 9, **caractérisé en ce que** chaque rail (3) s'étend verticalement à partir d'une surface de paroi intérieure (6) du garde-boue (1) qui est destinée à être dirigée vers un pneu de bicyclette après installation sur une bicyclette.

11. Assemblage selon la revendication 10, **caractérisé en ce que** chaque rail (3) s'étend dans la direction longitudinale du garde-boue (1).
